(19) Europäisches Patentamt / European Patent Office / Office européen des brevets

(11) **EP 1 806 856 A1**

(12) **EUROPEAN PATENT APPLICATION**

(43) Date of publication:
**11.07.2007 Bulletin 2007/28**

(51) Int Cl.:
*H04B 7/212* (2006.01)   *H04Q 7/36* (2006.01)

(21) Application number: **07107207.8**

(22) Date of filing: **13.05.2003**

| | |
|---|---|
| (84) Designated Contracting States:<br>**AT BE BG CH CY CZ DE DK EE ES FI FR GB GR HU IE IT LI LT LU MC PT RO SE SI SK TR**<br>Designated Extension States:<br>**AL BA HR MK YU** | (72) Inventor: **Marinier, Paul**<br>**Brossard Québec J4X 2J7 (CA)** |
| (30) Priority: **14.05.2002  US 378171 P**<br>**31.12.2002  US 335365** | (74) Representative: **Johansson, Magnus**<br>**Awapatent AB**<br>**Box 1066**<br>**251 10 Helsingborg (SE)** |
| (62) Document number(s) of the earlier application(s) in accordance with Art. 76 EPC:<br>**03734018.9 / 1 518 338** | Remarks:<br>This application was filed on 30 - 04 - 2007 as a divisional application to the application mentioned under INID code 62. |
| (71) Applicant: **INTERDIGITAL TECHNOLOGY CORPORATION**<br>**Wilmington, DE 19801 (US)** | |

(54) **Method and system for computing the optimal slot assignment to cells in cellular systems employing time division duplex**

(57)  An apparatus and method for optimizing allocation of time slots in a time-slotted wireless communication system in which a region covered by the system is divided into a plurality of cells is disclosed. The present invention determines a degree of isolation between the cells, and the maximum number of crossed slots between the cells. The present invention also assigns either an uplink or downlink direction to every slot of each cell.

*FIG. 1*

EP 1 806 856 A1

**Description**

BACKGROUND OF THE INVENTION

The present invention relates to wireless communications. More specifically, the present invention is related to third generation (3G) cellular systems employing time-division duplex (TDD) for separating base-to-mobile and mobile-to-base communications.

Wireless time-division cellular systems generally divide the time axis into intervals of equal durations called frames. Systems employing the TDD scheme divide time frames into a finite number ($N_T$) of intervals of equal durations, called slots, and allow a cell to use some or all of the slots for uplink (mobile-to-base) or downlink (base-to-mobile) transmissions. The slot assignment of a cell defines how each slot is used by this cell. There are three possible ways for a cell to use a slot: 1) uplink transmissions; 2) downlink transmissions; or 3) the slot is not used at all.

The slot assignment of a cell can be varied by the system in order to adapt to the requirements of the traffic. For example, the system may modify the assignment of one slot from uplink to downlink if the amount of downlink traffic increases while the uplink traffic decreases. In addition, different cells of a system generally do not need to have the same slot assignment. If traffic characteristics in one geographical area are different from another area, the cells covering those areas may have different assignment so as to best adapt to local traffic conditions.

The timeslot assignment $A_c$ of a cell c is represented by a set of $N_T$ values, where the s$^{th}$ value of the timeslot assignment ($A_{c,s}$), represents the usage of the sth slot in this cell. The number of slots used for uplink and downlink transmissions are denoted $N_c^u$ and $N_c^d$, respectively.

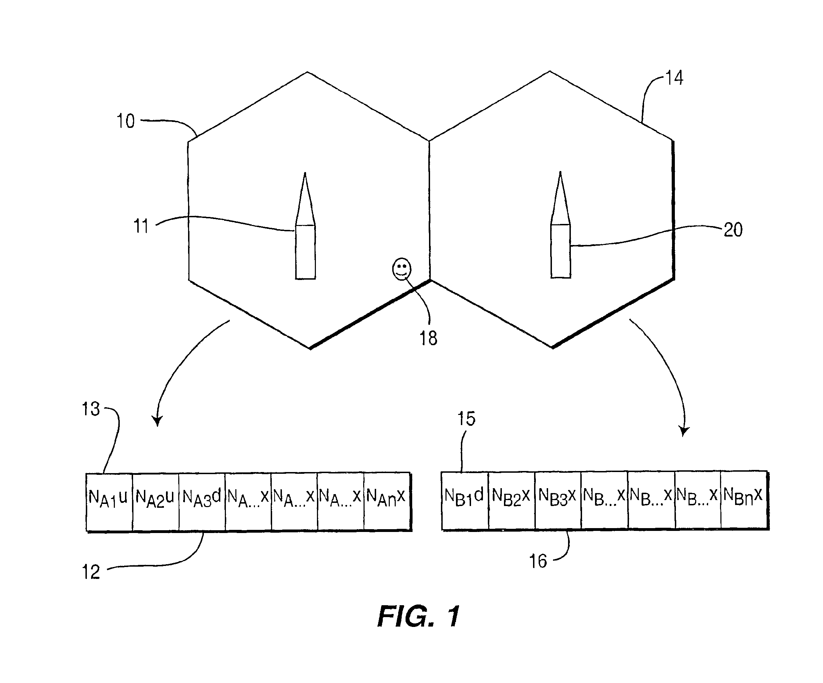

Figure 1 illustrates conflicting slot assignments for two cells in the same vicinity. A first cell 10 has a first time frame 12 which includes a plurality of timeslots $N_{A1}$ through $N_{AT}$. The time slots are used for uplink or downlink communications or not all. For the present example, assume that time slot $N_{A3}$ is used for uplink communications between a mobile unit 18 and a base station 11. A second cell 14, including a second base station 20, is in close proximity to the first cell 10. This cell communicates using a second time frame 15 including a plurality of timeslots $N_{B1}$- $N_{BT}$. In the second cell, the slots are also used for uplink or downlink communications or not all. For the present example, assume that timeslot $N_{B3}$ is used for downlink communications. Because of the cell's proximity to each other, there is a strong possibility of the second cell 14 causing interference with the communications between the base station 11 of the first cell 10 and mobile unit 18, which leads to system degradation (base-to-base interference scenario). Depending on the degree of isolation, in terms of path loss between the cells, this degradation may or may not be acceptable. The first cell 10 may have to assign the mobile unit 18 to another slot and mark this slot as unusable as an uplink slot in its cell, which reduces the capacity of the system.

Mobile-to-mobile interference scenarios may also occur due to uplink and downlink slot allocations for mobiles that are in close proximity. However, mobile-to-mobile interference is much more unpredictable than base-to-base interference and may be mitigated by means of an escape mechanism which reallocates user's codes to another timeslot where the interference is less severe.

Therefore, it is important to determine the best slot assignments for every cell, taking into account the conflicting requirements of adapting to local traffic variations and avoiding interference due to different time slot assignments between neighboring cells. "Crossed slots" occur when neighboring cells unconnectedly utilize the opposite slot assignments. A first cell may use the slot assignment for uplink communications and another cell uses the same slot assignment for downlink communications. This results in a possibility that the downlink transmission of one cell will interfere with the uplink reception of another cell. Therefore, it would be desirable to have a system which takes into account the time slot assignment of neighboring cells and efficiently coordinates time slot assignments to increase the overall performance and operation of each cell.

SUMMARY

The present invention is a system and method to optimize the number of uplink and downlink slots, given the maximum number of crossed slots between any two cells. The present invention determines the maximum number of crossed slots between any two cells and effectively assigns a direction, either uplink or downlink, to every slot in every cell of a system, taking into account the trade-off between a) avoiding base-to-base or mobile-to-mobile interference; and b) matching the slot assignment of every cell as closely as possible to the local traffic conditions. The present invention assigns users to slots according to their transmission power requirements in order to allow conflicting slot-to-cell assignments between two cells in the same geographic region.

BRIEF DESCRIPTION OF THE DRAWING

Figure 1 illustrates the problem of two adjacent cells wherein a first cell is in communication with a user equipment (UE) and a second cell's downlink interferes with the communication of the UE in the first cell.

Figures 2A and 2B is a flow diagrams for calculating $\left\{ \overline{N_c^u}, \overline{N_c^d} \right\}_{c=1}^{Mc}$ in accordance with the present invention.

Figure 3 illustrates an "island cluster" of primary stations surrounded by distantly located outer primary stations.

Figure 4 is a flow diagram for implementing the present invention.

DETAILED DESCRIPTION OF THE PREFERREDEMBODIMENTS

The present invention will be described with reference to the drawing figures wherein like numerals represent like elements throughout.

The present invention takes into account the following two premises. First, the maximum number of crossed slots between two cells increases when their mutual path loss isolation increases; or conversely, when the isolation decreases the number of crossed slots that can be tolerated decreases. Second, the cost associated with the choice of a particular slot assignment for a cell should be a function of the traffic that cannot be served (i.e. blocked or delayed) due to the choice of slot assignment.

It should be well understood by those skilled in the art that cells which are more isolated can afford to have a larger number of crossed slots. The term "isolation" is a generic term for the path loss between two base stations as related to base-to-base interference. It may also refer to a metric associated with the distribution of path losses between any pair of possible positions for two mobiles respectively connected to two cells (as related to mobile-to-mobile interference). In the latter case, the metric considered could be some percentile of the distribution.

If there is a very large isolation between two cells, the cells may choose their slot assignments autonomously. In such a case, it is obvious that the base-to-base or mobile-to-mobile interference would be insignificant. At the other extreme, cells that would be quasi co-located can not afford to have even a single pair of crossed slots. The amount of base-to-base interference produced would hamper or make any communications unsustainable for these slots.

The present invention may, however, be most advantageously applied to situations which fall between these two extremes where a limited number of crossed slots would be allowable by employing novel radio resource management (RRM) techniques. The wireless transmit receive units (WTRUs) which are close to their serving Node B, are preferentially assigned to the crossed slots, thus minimizing the probability of mobile-to-mobile interference.

The maximum number of crossed slots which can be tolerated is a function of many factors, including but not limited to, the geography of the users surrounding the Node B, the mobility of WTRUs and RRM performance. The maximum number of crossed slots between two cells (c1 and c2) is represented by ($X_{c1, c2}$). The present invention assumes that the maximum number of crossed slots between any pair of cells is known. In practice, an operator would decide an appropriate value for ($X_{c1, c2}$) by considering the extent to which the cells (c1 and c2) are isolated. This invention will also explain a possible systematic method to determine the ($X_{c1, c2}$).

The actual cost of a slot assignment (Fc) for a cell may be defined according to the amount of offered traffic that cannot be served because of the present slot assignments. It is irrelevant how a slot is assigned if the slot is not used due to lack of traffic. The cost function may also be expressed as a representation of the traffic blocked or delayed because of choice of specific slot assignment in a cell (c).

The cost function and the number of crossed slots are closely related to each other. It is desirable to minimize the overall cost function F, which is the sum of the individual cost functions Fc from every cell. If the slot assignments of every cell could be independently adjusted from each other, it would be an easy task because it would just be matching the number of uplink/downlink slots of every cell to its traffic characteristics. Unfortunately, the cells are not isolated and cell isolation must be taken into account. The lack of isolation causes the cells to interfere with each other as more conflicting slot assignments between two cells were utilized. This interference becomes intolerable if more than one crossed slot (i.e. $X_{c1,c2} > 1$) exists between cells c1 and c2. Thus the maximum number of crossed slots represents a constraint that must be considered when seeking the optimal solution that minimizes the cost function F.

The following values must be known to implement the invention: 1) the number of cells in the system (Mc); 2) the number of slots available for traffic in a TDD frame (Nt); 3) the minimum and maximum numbers of uplink slots available for traffic in a cell ($N_{\min}^u$ and $N_{\max}^u$, respectively); and 4) the minimum and maximum numbers of downlink slots available for traffic in a cell ($N_{\min}^d$ and $N_{\max}^d$, respectively). Then for each pair of cells (c1, c2), it is necessary to determine the maximum number of crossed slots $X_{c1, c2}$ the system can tolerate. This can be achieved in different ways: 1) such as in a coarse manner, by manually setting $X_{c1, c2} = 0$ if the cells c1 and c2 are relatively "close" to each other, and $X_{c1, c2} = Nt$ if the cells c1 and c2 are "far" from each other; 2) in a systematic manner, which is described below in paragraph 34; and 3) a "manual adjustment," in which the operator makes adjustments according to heuristic rules based on field experience, for example, possibly with an established system it was determined that with indoor cells placed 200 meters apart, the system can tolerate 4 allowed crossed slots without any problem.

The optimal slot-to-cell assignment is found when the number of uplink $\left(\overline{N_c^u}\right)$ and downlink $\left(\overline{N_c^d}\right)$ slots to assign in every cell cis found. The system assigns $\overline{N_c^u}$ uplink slots to cell c, $\overline{N_c^d}$ downlink slots to cell c, and the (Nt - $\overline{N_c^u}$ - $\overline{N_c^d}$) remaining slots are not used in cell c. The system will always assign uplink slots in the same order of preference for all cells. For example, suppose that there are Nt = 8 slots and the order of preference is (s1, s2, s3, s4, s5, s6, s7, s8). Then if $\overline{N_c^u} = 3,$ the system will assign slots s1, s2, s3 to the uplink in cell c. The system will also always assign downlink slots in the same order of preference for all cells, and this order must be the reverse of the order used for the uplink slots. In the above example, if we have $\overline{N_c^d} = 4$ the system will assign slots s8, s7, s6 and s5 to the downlink in cell c. Slot s4 would not be used at all in cell c. The order of preference for allocating slots may be determined by the operator arbitrarily.

The set of numbers $\left\{N_c^u, N_c^d\right\}_{c=1}^{Mc}$ mentioned above constitute the solution to the following optimization problem:

$$\text{Minimize}: \qquad F \equiv \sum_{c=1}^{Mc} F_c\ ; \qquad\qquad\qquad \text{Equation 1}$$

where F is the sum of all cost functions and Fc is the cost function associated to the slot assignment of a specific cell c, which is defined by Equation 2:

$$F_c = Ku \times \max\left(0, \min\left(T_c^u - N_c^u, N_{\max}^u\right)\right) + Kd \times \max\left(0, \min\left(T_c^d - N_c^d, N_{\max}^d\right)\right) \qquad \text{Equation 2}$$

where $T_c^u$ and $T_c^d$ denotes the number of slots required to serve all uplink and downlink traffic, respectfully, in cell c; Ku and Kd are weighting factors which permit a system operator to give more importance to either uplink or downlink traffic as desired; $N_c^u$ and $N_c^d$ are the number of slots used for uplink and downlink transmissions respectively in cell c; and $N_{\max}^u$ and $N_{\max}^d$ are the maximum number of uplink or downlink slots that can be assigned to a given cell. The above equation must be over the $\left\{N_c^u\right\}_{c=1}^{Mc}$ and $\left\{N_c^d\right\}_{c=1}^{Mc}$ values, subject to the following constraints: 1) $N_{\min}^u \le N_c^u \le N_{\max}^u$, where the limits $N_{\min}^u$ and $N_{\max}^u$ are the number of minimum and maximum uplink slots, respectively; 2) $N_{\min}^d \le N_c^d \le N_{\max}^d$, where the limits $N_{\min}^d$ and $N_{\max}^d$ are the number of minimum and maximum downlink slots, respectively slots; 3) $N_c^u + N_c^d \le N_t$, where the number of uplink and downlink slots of cell should be less than the total number of slots available in a particular cell; and 4) $\max\left(N_{c1}^u + N_{c2}^d - N_t, N_{c2}^u + N_{c1}^d - N_t\right) \le X_{c1,c2}$ for every pair of cells (c1, c2). This last constraint expresses the condition that two cells (c1, c2) cannot have more than $X_{c1,c2}$ crossed slots. The set of values for $\left\{N_c^u, N_c^d\right\}_{c=1}^{Mc}$ that minimize F and satisfy all the above-mentioned constraints is denoted $\left\{\overline{N_c^u}, \overline{N_c^d}\right\}_{c=1}^{Mc}$ and constitute the solution sought.

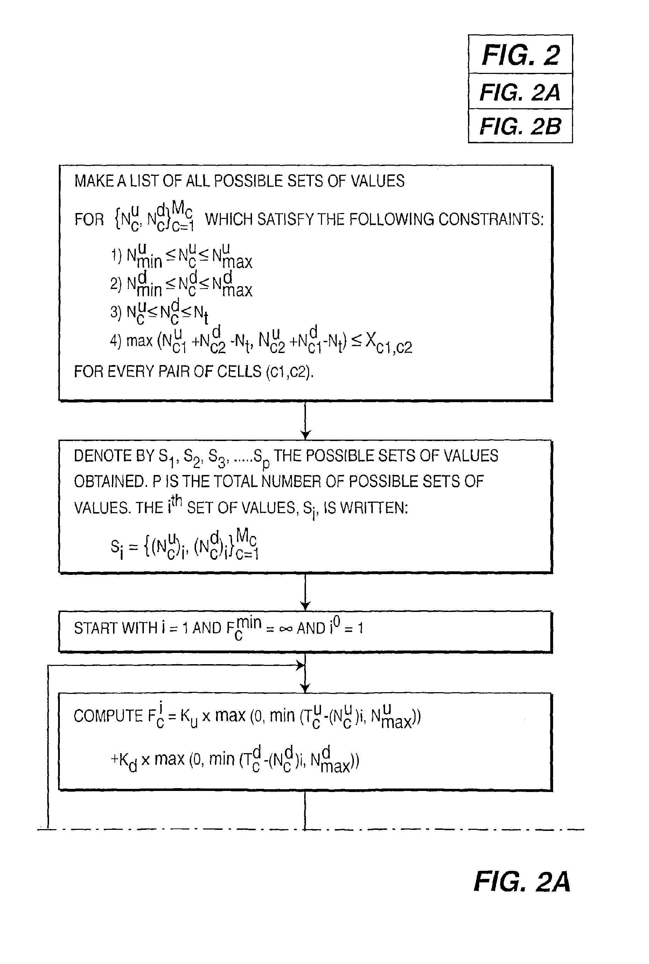

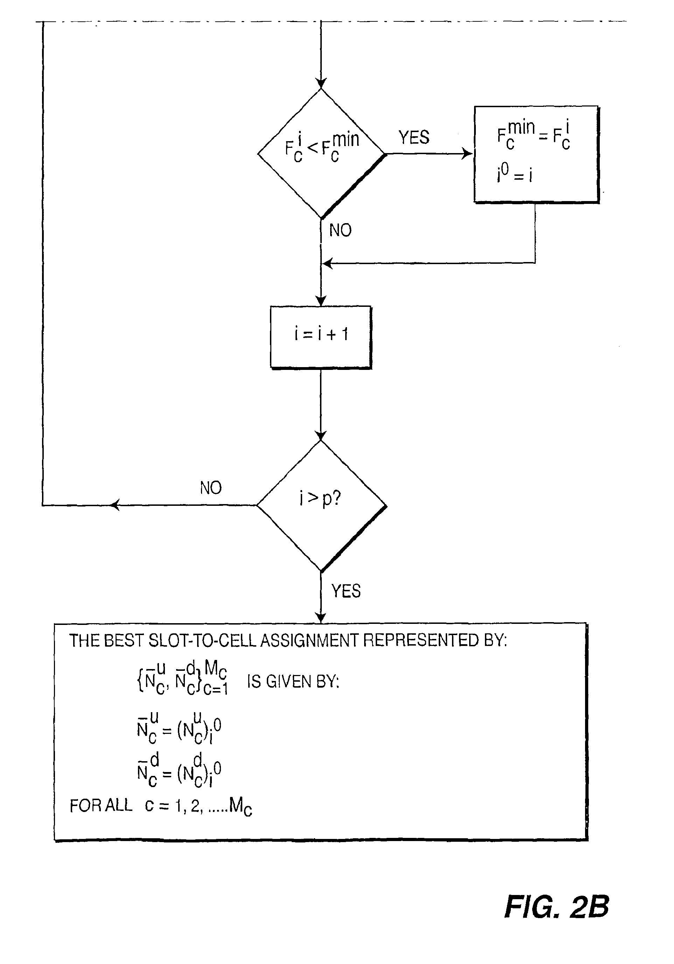

To further clarify the above, reference is made to Figure 2A and 2B which show a flow chart 300 comprising steps for obtaining $\left\{\overline{N_c^u}, \overline{N_c^d}\right\}_{c=1}^{Mc}$. To begin, a list of all possible sets of values for $\left\{\overline{N_c^u}, \overline{N_c^d}\right\}_{c=1}^{Mc}$ are determined in step 302, as explained in detail above. Then, the possible set of values obtained are denoted by S1, S2, S3,...Sp and the ith set of values, Si, is written as Si = $\text{Si} = \left\{N_c^u, \overline{N_c^d}\right\}_{c=1}^{Mc}$ (step 304). Then, in step 306, start with i=1 and Fc$^{min}$ = infinity and i$^0$ =1. Then, in step 308, compute

$$F_c = Ku \times \max\left(0, \min\left(T_c^u - N_c^u, N_{\max}^u\right)\right) + Kd \times \max\left(0, \min\left(T_c^d - N_c^d, N_{\max}^d\right)\right)$$ (i.e. equation 2). Next, in

step determine whether Fc$^i$ is greater than Fc$^{min}$. If yes, set Fc$^{min}$ equal to Fc$^i$ and i$^0$ equal to i in step 312 and then proceed to step 314. If not, proceed directly from step 310 to step 314 where i equals i + 1. From step 314 proceed to step 316 to determine whether i is greater than P. If not, return to step 308. If so, proceed to step 318. In step 318, the best slot-to-cell assignment represented by $\left\{\overline{N_c^u}, \overline{N_c^d}\right\}_{c=1}^{Mc}$ is given by the formulas shown in step 318 of Figure 2 for all c=1,2,...Mc.

The most obvious procedure to solve the optimization problem employs a "brute-force" technique, whereby the value of F is computed for every possible set of values $\left\{N_c^u, N_c^d\right\}_{c=1}^{Mc}$ satisfying the four above constraints. This approach is only practical for relatively small values of Mc or Nt, but could become computationally intensive otherwise.

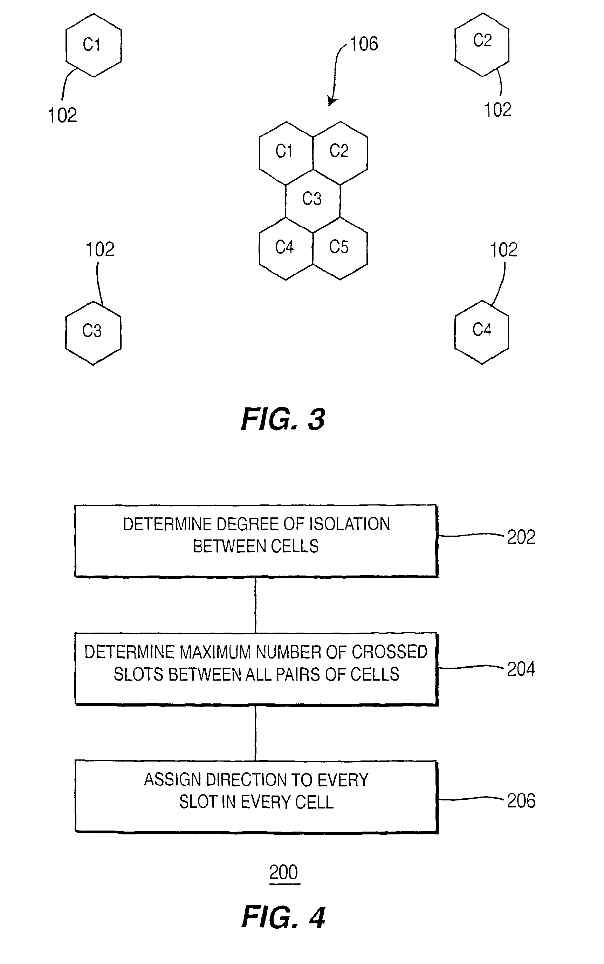

Referring now to Figure 3, there is an example of an "island cluster" of inner cells 106 whose cell patterns have extensive interrelations possibilities. Therefore, for cells 106, $X_{ci,cj}$ [where (i,j) is any pair of different cells among (c1, c2, c3, c4, and c5)] should be set to a small number because the degree of isolation between cells 106 is minimal. An outer group of cells 102, in contrast, has a higher degree of isolation and may therefore have a higher value of $X_{ci,cj}$ [where (i,j) is any pair of different cells among (c1, c2, c3, c4, and c5 belonging to group 102)] .

Referring again to a hypothetical example having two cells c1 and c2, the "systematic manner," as mentioned above, may be used to determine the maximum number of crossed slots between two cells ($X_{c1,c2}$). When using the systematic method to determine the maximum number of crossed slots ($X_{c1,c2}$) between cells c1 and c2, the maximum range, R, of the cells should be known. The maximum range of a cell is the maximum distance between a mobile connected to this cell and a base station serving that cell. In the case that the two cells, c1 and c2 do not have the same maximum range, R may be set to the larger of the two values. The distance between the two cells, c1 and c2 may be represented by $D_{c1,\ c2}$. A parameter, p is set by the operator. It has a maximum value of 1.0 and a minimum value of 0.0. The p value represents the minimum allowable ratio between: a) the distance between a mobile connected to cell c1 and a mobile connected to cell c2 when those mobiles use the same slot in opposite directions; and b) the distance between base station serving cell c1 and base station serving cell c2. When the value of p decreases, the probability of allowing crossed slots between two cells increases, while increasing the value of p has the opposite effect. Using the variables outlined above, the maximum number of crossed slots $X_{c1,\ c2}$ can be determined using Equation 3:

$$X_{c1,\ c2} = Nt \times \min(1, \text{round}((1\text{-}\rho)^2 (D_{c1,\ c2})^2 / 4R^2 ));\qquad \text{Equation 3}$$

where round($(1\text{-}\rho)^2 (D_{c1,\ c2})^2 / 4R^2$)) denotes the operation of rounding $((1\text{-}\rho)^2 (D_{c1,\ c2})^2 / 4R^2)$) to the nearest integer or alternatively, round($(1\text{-}\rho)^2 (D_{c1,c2})^2 / 4R^2$)) can be replaced by floor($(1\text{-}\rho)^2 (D_{c1,c2})^2 / 4R^2$)), which denotes the operation of getting the largest integer inferior or equal to $((1\text{-}\rho)^2 (D_{c1,2})^2 / 4R^2)$).

Referring again to equation (2), the reason for the presence of the terms $N_{\max}^u$ and $N_{\max}^d$ is that we want to take into account only the cost due to the choice of the slot assignment and not the cost due to the sheer lack of capacity in a particular area. For example, if serving the downlink traffic in a particular cell would require 32 slots and the maximum number of downlink slots in an assignment is only 14, then the downlink component of the cost function should be limited to 14 since it is not possible with any slot assignment to serve all the offered downlink traffic.

It should be understood by those of skill in the art that it is typically impractical to modify the slot assignments at a high frequency because of the need for handing over connections from affected slots to other slots. Accordingly, the traffic estimates used in Equation 2 should be based on long-term averages consistent with the frequency of modifications of the slot assignment. For example, if the slot assignments are to be modified only every 30 minutes, the offered traffic estimates should be averaged over the same temporal period, (one with the same order of magnitude.) Estimates can be derived based on various metrics such as traffic volume measurements, buffer occupancies, and frequency of blocked calls by admission control.

Another embodiment of the present invention is to assign only users with the lowest power requirements to conflicting slot assignments. That is, downlink slot(s) conflicting with uplink slot(s) in neighboring cells can be managed by setting a limit on the base station power per physical channel as defined by a code and a timeslot for any user occupying those slots. Conversely, for uplink slot(s) this is managed by setting a limit on the uplink power per slot. The amount of performance degradation in the system will be reduced through two effects. The first effect is the interference produced by a transmitter is directly proportional to its transmission. Second, by limiting the transmission power of a user one limits its maximum distance from its serving base station, thereby reducing the probability that it either produces interference to, or sustain significant interference from another user connected to the neighboring base station that has a conflicting slot assignment.

It should be noted that other algorithms may be utilized to achieve the cost function and that these alternative algorithms do not take away from the spirit of the present invention.

Referring now to Figure 4, there is shown a method 200 for implementing the present invention. For the sake of brevity and because implementation of the invention is explained above, the steps of method 200 will not be described in detail. To begin, in step 202, a degree of isolation between cells is determined as explained above. As explained, the degree of isolation between cells is proportional to the maximum number of crossed slots between those same cells. Next, in step 204, the maximum number of crossed slots is determined. Then, in step 206, a direction, either uplink or downlink, is assigned to every slot in every cell of the system.

Although the present invention has been described in detail, it is to be understood that the invention is not limited thereto, and that various changes can be made therein without departing from the spirit and scope of the invention, which is defined by the attached claims.

EMBODIMENTS

1. A system to optimize a plurality of slots in a communications system in which a maximum number of crossed slots exists between a plurality of cells, comprising:

means to assign a direction to each slot in each cell of the system in which base-to-base interference is reduced; and
wherein slot assignments for each cell relate to communication traffic conditions.

2. The system of item 1 wherein the plurality of slots are uplink slots.

3. The system of item 1 wherein the plurality of slots are downlink slots.

4. The system of item 1 wherein the interference is mobile-to-mobile interference.

5. The system of item 1 wherein the slot assignments are made according to transmission power requirements to allow conflicting slot-to-cell assignments between two cells in the same geographic region.

**Claims**

1.  A method for optimizing allocation of time slots in a time-slotted wireless communication system in which a region covered by the system is divided into a plurality of cells, the method comprising:

determining a degree of isolation between the cells;
determining the maximum number of crossed slots between the cells; and
assigning either an uplink or downlink direction to every slot of each cell.

2.  The method of claim 1 wherein the maximum number of crossed time slots is based on the extent of isolation between adjacent cells.

3. The method of claim 2 wherein the extent of isolation is determined based on at least one of : geography between wireless transmit/receive units (WTRUs) and base stations; mobility of WTRUs served by the base stations; and radio resource management function of the base stations.

4. The method of claim 1 wherein the maximum number of crossed time slots is based on at least one of: a distance between two wireless transmit/receive units connected to adjacent base stations and a distance between adjacent base stations.

5. The method of claim 1 further comprising:

calculating a cost incurred due to each crossed time slot allocation, wherein time slots are allocated such that costs are minimized.

6. The method of claim 5 wherein a traffic delay due to the crossed time slot allocation is considered in calculation of the cost.

7. An apparatus for optimizing allocation of time slots in a time-slotted wireless communication system in which a region covered by the system is divided into a plurality of cells, the apparatus comprising:

means for determining a degree of isolation between the cells;
means for determining the maximum number of crossed slots between the cells; and
means for assigning either an uplink or downlink direction to every slot of each cell.

8. The apparatus of claim 7 wherein the maximum number of crossed time slots is based on the extent of isolation between adjacent cells.

9. The apparatus of claim 8 wherein the extent of isolation is determined based on at least one of: geography between wireless transmit/receive units (WTRUs) and base stations; mobility of WTRUs served by the base stations; and radio resource management function of the base stations.

10. The apparatus of claim 7 wherein the maximum number of crossed time slots is based on at least one of: a distance between two wireless transmit/receive units connected to adjacent base stations and a distance between adjacent base stations.

11. The apparatus of claim 7 further comprising:

means for calculating a cost incurred due to each crossed time slot allocation, wherein time slots are allocated such that costs are minimized.

12. The apparatus of claim 11 wherein a traffic delay due to the crossed time slot allocation is considered in calculation of the cost.

FIG. 1

| FIG. 2 |
| --- |
| FIG. 2A |
| FIG. 2B |

MAKE A LIST OF ALL POSSIBLE SETS OF VALUES

FOR $\{N_c^u, N_c^d\}_{c=1}^{M_c}$ WHICH SATISFY THE FOLLOWING CONSTRAINTS:

1) $N_{min}^u \leq N_c^u \leq N_{max}^u$
2) $N_{min}^d \leq N_c^d \leq N_{max}^d$
3) $N_c^u \leq N_c^d \leq N_t$
4) $\max (N_{c1}^u + N_{c2}^d - N_t, \ N_{c2}^u + N_{c1}^d - N_t) \leq X_{c1,c2}$

FOR EVERY PAIR OF CELLS (c1,c2).

$\downarrow$

DENOTE BY $S_1, S_2, S_3, \ldots S_p$ THE POSSIBLE SETS OF VALUES OBTAINED. P IS THE TOTAL NUMBER OF POSSIBLE SETS OF VALUES. THE $i^{th}$ SET OF VALUES, $S_i$, IS WRITTEN:

$$S_i = \{(N_c^u)_i, \ (N_c^d)_i\}_{c=1}^{M_c}$$

$\downarrow$

START WITH $i = 1$ AND $F_c^{min} = \infty$ AND $i^0 = 1$

$\downarrow$

COMPUTE $F_c^i = K_u \times \max (0, \min (T_c^u - (N_c^u)i, N_{max}^u))$

$+ K_d \times \max (0, \min (T_c^d - (N_c^d)i, N_{max}^d))$

*FIG. 2A*

FIG. 2B

C1

102

106

C2

102

C1 C2
C3
C4 C5

102

C3

102

C4

**FIG. 3**

DETERMINE DEGREE OF ISOLATION
BETWEEN CELLS — 202

DETERMINE MAXIMUM NUMBER OF CROSSED
SLOTS BETWEEN ALL PAIRS OF CELLS — 204

ASSIGN DIRECTION TO EVERY
SLOT IN EVERY CELL — 206

200

**FIG. 4**

**European Patent Office**

## EUROPEAN SEARCH REPORT

Application Number

EP 07 10 7207

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 594 720 A (PAPADOPOULOS ET AL) 14 January 1997 (1997-01-14) * abstract * * column 2, line 32 - line 56 * * column 8, line 1 - line 48 * ----- | 1-12 | INV. H04B7/212 H04Q7/36 |
| X | WO 01/99454 A (ERICSSON TELEFON AB L M [SE]; SKILLERMARK PER [SE]; KARLSSON MAGNUS [S] 27 December 2001 (2001-12-27) * column 7, line 15 - column 9, line 23 * ----- | 1,7 | |

TECHNICAL FIELDS SEARCHED (IPC)

H04Q

The present search report has been drawn up for all claims

| Place of search | Date of completion of the search | Examiner |
|---|---|---|
| Munich | 31 May 2007 | Harrysson, Andreas |

EPO FORM 1503 03.82 (P04C01)

## ANNEX TO THE EUROPEAN SEARCH REPORT
## ON EUROPEAN PATENT APPLICATION NO.

EP 07 10 7207

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2007

| Patent document cited in search report | | Publication date | Patent family member(s) | | Publication date |
|---|---|---|---|---|---|
| US 5594720 | A | 14-01-1997 | CA | 2135950 A1 | 25-05-1995 |
| | | | EP | 0654916 A2 | 24-05-1995 |
| | | | FI | 945507 A | 25-05-1995 |
| | | | JP | 7203545 A | 04-08-1995 |
| | | | NO | 944404 A | 26-05-1995 |
| | | | US | 5420851 A | 30-05-1995 |
| | | | US | 5602836 A | 11-02-1997 |
| WO 0199454 | A | 27-12-2001 | AU | 7474901 A | 02-01-2002 |
| | | | SE | 0002285 A | 20-12-2001 |

For more details about this annex : see Official Journal of the European Patent Office, No. 12/82